(19) Europäisches Patentamt
European Patent Office
Office européen des brevets

(11) Numéro de publication: **0 133 392 B1**

(12) **FASCICULE DE BREVET EUROPEEN**

(45) Date de publication du fascicule du brevet: **01.04.87**

(51) Int. Cl.⁴: **C 08 F 2/14**

(21) Numéro de dépôt: **84401451.4**

(22) Date de dépôt: **09.07.84**

(54) **Procédé de préparation de copolymères en grains, fonctionnalisés, par polymérisation en suspension dans un milieu non aqueux.**

(30) Priorité: **13.07.83 FR 8311738**

(43) Date de publication de la demande: **20.02.85 Bulletin 85/8**

(45) Mention de la délivrance du brevet: **01.04.87 Bulletin 87/14**

(84) Etats contractants désignés: **AT BE CH DE FR GB IT LI LU NL SE**

(56) Documents cités:
**FR - A - 2 309 566**
**US - E - 27 026**

(73) Titulaire: **SOCIETE NATIONALE ELF AQUITAINE, Tour Aquitaine, F-92400 Courbevoie (FR)**

(72) Inventeur: **Bonnans, Chantal, Marie-France, 6, rue de Chenonceaux, F-72000 Le Mans (FR)**
Inventeur: **Levesque, Guy, Jean, 19 Rue de l'Unité, Epron, F-14610 Thaon (FR)**

(74) Mandataire: **Phélip, Bruno et al, c/o Cabinet Harlé & Phélip 21, rue de la Rochefoucauld, F-75009 Paris (FR)**

EP 0 133 392 B1

*Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).*

ACTORUM AG

## Description

La présente invention concerne un procédé de préparation en une seule étape de copolymères en grains, porteurs de groupes fonctionnels très réactifs.

Les applications de tels polymères réactifs, sur lesquels pourront se fixer selon le cas des produits chimiques, biochimiques ou des cellules, sont multiples, mais jusqu'à présent ces polymères (réticulats ou gels) en grains ne pouvaient être préparés qu'en deux étapes. En effet, dans les conditions connues de polymérisation radicalaire en suspension, on opérait soit avec les monomères — comme le styrène — en solution organique et en émulsion dans l'eau, soit avec les monomères plus polaires — comme des acrylamides — en solution aqueuse et en émulsion dans une huile minérale, et à des températures allant de 30 à 80°C pour des durées de réaction de 4 à 30 heures. Dans de telles conditions pratiquement aucun groupe fonctionnel suffisamment réactif pour être susceptible de fixer ultérieurement, selon le cas, un produit chimique, biochimique ou une cellule, n'est assez stable et il n'était pas possible d'introduire dans le milieu de polymérisation des monomères porteurs du groupe souhaité sans que celui-ci ne soit, au moins partiellement, détruit par hydrolyse. Aussi, on a préconisé qu'en une première étape, on prépare un polymère ou un copolymère porteur de fonctions latérales stables en milieu aqueux mais susceptibles de réagir ultérieurement, avec des entités divalentes qui en se fixant créent les sites réactifs recherchés et que lors d'une deuxième étape dite «d'activation», on introduis ces fonctions réactives; cette étape étant même fréquemment réalisée seulement par l'utilisateur, avec toutes les difficultés que cela comporte. On peut citer à titre d'exemple la chlorométhylation de gels de polystyrène, la formylation de copolymères d'acrylamides utilisée pour fixer des amines chirales et donner des résines convenant pour le remplissage de colonnes de chromatographie liquide sous haute pression qui permettent la séparation d'énantiomères [J. Liquid Chromatog. 1 *67*, p. 761 (1978)], ou encore l'activation de copolymères d'acrylamides par le bromure de cyanogène pour obtenir des gels fixant des macromolécules biologiques (FR-A-2 398 762).

Le procédé selon l'invention consiste à réaliser la polymérisation radicalaire dans un milieu constitué de deux liquides organiques non miscibles, formant une émulsion de l'un dans l'autre, l'une des phases appelée dispersée étant le solvant des monomères et agent initiateur, l'autre — ou phase dispersante — assurant la dispersion de cette solution pour que les gels soient obtenus sous forme de grains, perles, ou billes. Dans le cas où un monomère est liquide, il peut être utilisé comme un solvant.

Lorsque le procédé est appliqué, outre au monomère porteur de la fonction réactive, à des monomères polaires, pour obtenir des gels réticulés en grains hydrophiles, on utilisera pour la phase dispersée, un liquide polaire — pour que la solubilité des monomères soit suffisante — et inerte vis-à-vis des radicaux libres tandis que l'autre phase organique non miscible sera une huile aux liaisons saturées pour qu'elle ne participe pas à la réaction de polymérisation.

Des monomères polaires sont par exemple l'acrylamide, les N-(hydroxyalkyl)acrylamides, l'acide acrylique, l'acrylonitrile ou leurs mélanges; le liquide polaire peut être l'un quelconque des solvants polaires utilisés en chimie, stables en présence de radicaux libres et notamment de diméthylformamide ou le diméthylacétamide, la N-méthylpyrrolidone, ou autres amides, l'hexaméthylphosphotriamide, le diméthylsulfoxyde ou le sulfolanne, des carbonates d'éthylène ou de propylène, l'acétonitrile et autres nitriles, les polyéthylèneglycols et leurs éthers et esters. Quant à la seconde phase liquide non misible avec ces solvants polaires, elle sera avantageusement choisie parmi les huiles minérales, telle que l'huile de vaseline, l'huile de paraffine, les huiles de silicone ou les huiles végétales saturées.

Lorsque le procédé est appliqué, outre au monomère porteur de la fonction réactive, à des monomères peu polaires ou apolaires, tels le styrène et dérivés, la phase dissolvant les monomères sera moins polaire que la phase dispersante. Ainsi, comme solvant du monomère, on utilisera des hydrocarbures aliphatiques ou aromatiques — comme le benzène — purs ou en mélanges. La phase dispersante pourra être alors un glycol non miscible ou l'un de ses éthers ou esters, tel l'éthylène- ou le propylèneglycol, le polyéthylène- ou polypropylèneglycol, le triméthylolpropane et leurs dérivés.

Une forme préférée de mise en oeuvre de l'invention consiste à utiliser un mélange de trois monomères pour obtenir un copolymère réticulé tridimensionnel insoluble dans l'eau et réactif. L'un des monomères donnera le squelette du gel (ou réticulat) et diverses propriétés du gel dont l'hydrophilie, la polarité, la polarisabilité, etc. dépendront de sa structure.

Le second monomère permet la réticulation et comporte par conséquent au moins 2 doubles liaisons susceptibles de s'ouvrir pour donner des chaînes ou des cycles — enfin le dernier monomère est celui porteur de la fonction réactive que portera le gel final; la structure chimique de ce monomère — qualifié de réactif, dépend donc de l'utilisation ultérieure du gel réactif. Lorsque celui-ci doit fixer des amino acides, des peptides ou des protéines, c'est le groupe amino de ces composés qui réagit avec le gel réactif et on conçoit que celui-ci peut porter toute fonction acylante — tels un groupe ester activé, chlorure d'acide, isothiocyanate, chlorocarbonate, ou isocyanate — ou une fonction alkylante — telle un radical halogénométhylène, comme dans les bromo et chlorométhylstyrènes. Selon l'invention sont notamment préconisés comme monomères réactifs: les chlorures d'acides acryliques et méthacryliques, le chloroformiate de vinyle, les dithioesters styréniques, les thioacétates de vinyles, les halogénoalkylstyrènes dont les bromométhyl et chlorométhyl styrènes mais aussi, pour obtenir des gels réagissant sur d'autres groupements qu'amino, des vinyl pyridines, les dérivés de l'aminostyrène, la N-vinylacétamide ou tous autres composés porteurs d'un groupe réactif et polymérisables par les radicaux libres.

Pour obtenir des gels hydrophiles, le procédé de

polymérisation selon l'invention est applicable aux dérivés acryliques, en tant que monomères de squelette; on peut citer plus particulièrement les acrylamides — et notamment l'acrylamide et le méthacrylamide et leurs dérivés mono et dialkyl, hydroxyalkyle ou polyhydroxyalkyle purs ou en mélange choisis suivant le degré d'hydrophilie souhaité pour le gel final; ou encore les acides et esters acryliques et méthacryliques, et les esters acryliques de mono ou polyalcools, les esters et amides acryliques des amino-alcools tels que les mono et polyéthanolamines, les aminopropanol et butanol ou encore les acrylo et méthacrylonitriles et cyanoacrylates. Mais des dérivés éthyléniques, tel l'acétate et autres esters de vinyle et le styrène peuvent aussi être utilisés. Le monomère, porteur d'au moins deux doubles liaisons polymérisables et qui permet donc la réticulation, peut être un bis-acrylamide — tel que méthylène ou polyméthylène bis-acrylamide, un bis-acrylate — tels ceux de glycols — un polyacrylate de polyalcools — un tris-allylmellitate — ou encore du divinylbenzène (1,4 ou mélange d'isomères).

Outre les trois monomères, et les deux liquides non miscibles, le milieu réactionnel contiendra un agent initiateur générateur de radicaux libres, choisi parmi ceux généralement utilisés en polymérisation radicalaire comme les peroxydes, les peresters, les percarbonates, les dérivés azoïques ou un système red-ox soluble dans le milieu (peracide et thioamide tel l'urée). La polymérisation selon l'invention peut avantageusement être réalisée en présence d'un agent porogène, dont la nature est fonction de celle des monomères et qui permet de moduler la surface spécifique du réticulat et son volume poreux — on sait que certains acides et alcools aliphatiques et leurs amides ou esters, ainsi que des polyéthers sont utilisables.

Enfin, selon un mode préféré de réalisation de l'invention, un agent tensio-actif sera ajouté au milieu pour faciliter la formation de la suspension et la stabiliser; on préfère des agents tensio-actifs non ioniques, les liquides utilisés étant de mauvais solvants des ions, tel que les esters gras de dissacharides (Span®).

Le procédé selon l'invention est particulièrement avantageux dans les nombreux cas où les monomères «réactifs» polymérisent moins vite que les monomères donnant le squelette. En effet les premiers sont incorporés plutôt à la fin de la réaction de polymérisation et se retrouvent ainsi à la surface des grains. Il en résulte une excellente accessibilité, dans le réticulat final, de presque toutes les fonctions réactives introduites, c'est par exemple ce qui est constaté avec les gels d'acrylamides et d'hydroxyalkylacrylamides et les monomères réactifs porteurs d'une fonction pouvant réagir sur les amines.

La mise en oeuvre du procédé de polymérisation en suspension selon l'invention est effectuée en une seule étape réactionnelle qui comporte:

a) la mise en solution dans le solvant approprié — polaire pour un gel hydrophile — d'un mélange:

1) du monomère qui formera le squelette en une quantité telle qu'il représente au moins 50% en poids de la totalité des solutés (monomères et divers agents),

2) du monomère de réticulation qui peut constituer 3 à 30% en poids des solutés et de préférence de 5 à 25%, l'insolubilité dans l'eau du réticulat n'apparaissant que pour des quantités suffisantes de ce composé; la rigidité des grains de réticulat dépend de la quantité du monomère introduite,

3) du monomère réactif qui constitue 0,5 à 10% en poids des solutés et de préférence de 3 à 5%, et l'addition à cette solution de l'agent initiateur (de 0,1 à 5% en poids de l'ensemble des solutés) ainsi que, si nécessaire, la dissolution dans la phase dispersive convenablement choisie, si nécessaire d'un peu d'agent tensio-actif, ainsi que de l'agent porogène, ce dernier en quantité telle qu'il représente de 0 à 50% en poids de tous les solutés,

b) l'introduction de la solution des monomères dans la phase dispersive pour obtenir sous une forte agitation une émulsion d'une phase dans l'autre,

c) le maintien du mélange à la température voulue, soit vers 60°C, dans le cas d'amorçage par des azoïques, sous agitation jusqu'à fin de la réaction de polymérisation, ce qui nécessite en général de 15 à 30 heures et de préférence sous atmosphère inerte; puis la séparation des grains de réticulat du milieu réactionnel par tout moyen approprié, tel une décantation ou un essorage et le traitement de ces grains, de façon classique, pour en éliminer les solvants et monomères résiduels.

Les grains de réticulat obtenus en appliquant le procédé de polymérisation selon l'invention ont une taille qui est principalement fonction de l'intensité d'agitation et de la quantité d'agent tensio-actif introduit dans le milieu mais aussi de la quantité d'agent porogène au moins si celle-ci est élevée, étant donné les propriétés tensio-actives faibles de ces agents. En général, on obtient des grains de 0,1 à 3 mm dans leur plus grande dimension, ce qui permet d'utiliser les gels réactifs pour de nombreuses applications.

*Exemple 1*

Copolymère d'acrylamides porteur de la fonction dithiobenzoate de carboxyméthyle

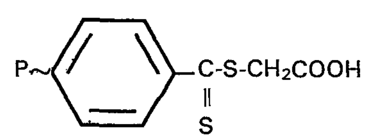

On dissout dans 100 ml de N-méthylpyrrolidone 2,38 g de vinyl-4 dithiobenzoate de carboxyméthyle, préparé par exemple selon Makro-mol. chem. 182, 2409-19 (1981), 10,48 g de N-[(tris-hydroxyméthyl)méthyl]acrylamide, 8,1 g d'acrylamide et 2,16 g de N-N'-méthylène bis(acrylamide) puis 2 g d'azo-bis-isobutyronitrile.

Cette solution est introduite dans un réacteur en verre de 1 litre, contenant 800 ml d'huile de vaseline et 40 gouttes de SPAN 80®. On balaye soigneusement à l'azote puis on agite l'ensemble par rotation d'un arbre vertical porteur de deux hélices de pas inverses, ayant au moins chacune deux pales, l'ensemble étant en verre résistant PYREX® par exemple; on porte à 60°C et on maintient cette température pendant 20 heures, sous surpression d'azote.

On isole alors les grains de réticulat, gonflés de solvant, formés, soit par décantation, soit par essorage; les traces d'huile sont éliminées par lavage des grains à l'hexane et le solvant par des lavages avec le chlorure de méthylène. Pour utiliser ces grains de polymère réticulé comme support, avant leur emploi on les gonfle à l'eau, puis effectue un lavage à l'eau suivi d'un séchage soit à l'air soit sous pression réduite, s'il est nécessaire d'éliminer toute l'eau.

Le rendement en produit sec est de 75 à 80% en poids des monomères introduits.

Les groupes acides COOH de la fonction réactive -C-S $CH_2COOH$ sont dosés par mise en suspension
||
S
du réticulat dans une solution de NaCl à 1 mole/l, et suivi de l'évolution du pH de la solution lors de l'addition progressive d'une solution aqueuse de NaOH 1/20 N. On détermine ainsi que ce polymère contient 0,047 meq/v par gramme de fonctions acides accessibles au réactif emloyé, ce qui, compte tenu du résultat de l'analyse élémentaire donnant le pourcentage de S dans le polymère montre bien que les fonctions réactives sont en grande majorité à la surface des grains. Le taux de gonflement de la résine, en quantité d'eau en g retenus par g de gel sec, est de 3,5.

*Exemple 2*

Copolymère d'acrylamides porteurs de la fonction dithiobenzoate de carboxyméthyle (autres conditions opératoires).

On dissout dans 120 ml de N-méthylpyrrolidone, 2,14 g de vinyl-4 dithiobenzoate de carboxyméthyle, 16,8 g de N-[(tris-hydroxyméthyl)méthylacryl]amide, 12,34 g d'acrylamide et 3,24 g de N-N'-méthylène bis-(acrylamide) puis 3 g d'azo-bis-isobutyronitrile et verse la solution dans 800 ml d'huile de vaseline contenant 40 gouttes de SPAN 80®. Le mélange est maintenu sous azote 27 heures à 60°C sous forte agitation.

Dans ces conditions le rendement en réticulat est de 95%; le dosage de la fonction réactive acide donne un taux de 0,035 meq/v d'acide par gramme de polymère.

Le taux de gonflement dans l'eau est voisin de 3.

*Exemple 3*

Copolymère d'acrylamides porteur de la fonction dithiobenzoate de carboxyméthyle préparé en présence d'agent porogène.

On dissout dans 100 ml de N-méthylpyrrolidone, 3 g de vinyl-4 dithiobenzoate de carboxyméthyle, 12,5 g de N-(tris-hydroxyméthyl)méthylacrylamide, 9 g d'acrylamide, 1,9 g de méthylène-bis-acrylamide et 2,5 g d'azo-bis-isobutyronitrile. Cette solution est versée dans 850 ml d'huile de vaseline contenant 20 g de monométhyléther du triéthylèneglycol et 20 gouttes de SPAN 80®. Le mélange est maintenu sous forte agitation, pendant 27 heures, à 60°C sous azote.

Le rendement de cette opération est de 85% pour un copolymère présentant 0,052 meq/v de fonction acide dosable par gramme et ayant un taux de gonflement de 2,8.

*Exemple 4*

Copolymère d'acrylamides porteur de fonctions chlorure d'acide: (P) ~ COCl.

On dissout dans 75 ml de N-méthylpyrrolidone 6,7 g d'acrylamide, 15,2 g de N(hydroxy-1-butyl)-2-acrylamide, 3,2 g de N-N'-méthylène-bis-acrylamide, 2 g d'azo-bis-isobutyronitrile puis 4,6 g de chlorure d'acryloyle. Cette solution est versée dans 750 ml d'huile de vaseline contenant 50 gouttes de SPAN 80. On maintient le mélange, sous azote, à 60°C pendant 22 heures. Les grains de rétuculat sont alors isolés, mais ne peuvent être purifiés par lavage à l'eau, étant donné la sensibilité de la fonction chlorure d'acide à l'eau; aussi, on augmente le nombre de lavages par un solvant organique, tel que le chlorure de méthylène, on dose les fonctions chlorure d'acide du polymère obtenu en faisant une hydrolyse alcaline de (P) ~ COCl par un excès de base et en dosant en retour la base non employée; on détermine en outre le pourcentage total du chlore. Les résultats obtenus montrent que pratiquement tout le chlorure d'acide a été incorporé et reste réactif dans le polymère, ce type de gel est utilisable de préférence en milieu anhydre, mais l'hydrolyse étant plus ou moins lente, il peut servir à immobiliser en milieu aqueux des molécules plus nucléophiles que l'eau.

*Exemple 5*

Copolymère d'acrylamide à fonction réactive isocyanate: (P) ~ $CH_2CH_2$—N = C = O

On opère comme dans l'exemple 4 mais en utilisant 5,5 g d'isocyanatoéthylstyrène au lieu des 4,6 g de chlorure d'acryloyle, la fonction étant relativement stable en milieu aqueux contrairement au cas précédent, on peut terminer les lavages par un lavage rapide à l'eau avant l'emploi de ce gel comme agent d'immobilisation.

*Exemple 6*

Copolymère de styrène et divinylbenzène porteur de la fonction dithiobenzoate de méthyle.

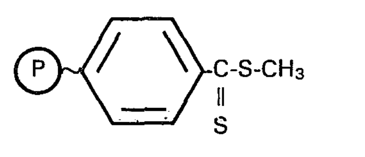

On dissout 33,2 g de styrène, 4,2 g de divinyl-1,4 benzène et 4,2 g de vinyl-4 dithiobenzoate de méthyle dans un mélange de 70 ml de benzène et 30 ml de timéthyl-2,2,4 pentane. On verse cette solution, dans laquelle on ajoute 3,5 g d'azo-bis-isobutyronitrile dans 550 ml d'éthylèneglycol anhydre contenant 30 gouttes de SPAN 80. Le mélange est maintenu, sous forte agitation, à 75°C pendant 20 heures. Les grains de polystyrène fonctionnel réticulé sont alors séparés, lavés au méthanol puis avec un solvant chloré, tel que le chloroforme, et séchés.

Le rendement en polymère par rapport au poids de monomère introduit est de 75%; tout le monomère fonctionnel a été incorporé.

*Exemple 7*

Copolymère de styrène et de divinyl benzène porteur de la fonction chlorocarbonate

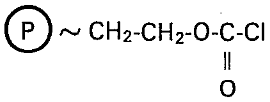

On dissout 30,5 g de styrène, 4,2 g de divinyl-1,4 benzène et 2,2 g de chloroformiate de vinyle dans un mélange de 80 ml de benzène et 18 ml de triméthyl--2,2,4 pentane. On ajoute 3,1 g d'azo-bis-isobutyronitrile à cette solution que l'on disperse dans 520 ml de triéthylèneglycol anhydre contenant 30 gouttes de SPAN 80®.

La suite est réalisée comme dans l'exemple 6 pour donner des grains de polystyrène réticulé (rendement 73%) contenant 85% des fonctions réactives introduites sous forme de chloroformiate de vinyle.

*Exemple 8*

Copolymère de styrène, de chlorométhylstyrène et de divinylbenzène.

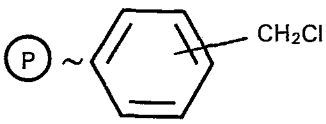

On dissout 35,2 g de styrène, 4,6 g de divinylbenzène (mélange d'isomères) et 2,5 g de chlorométhylstyrène (mélange d'isommères) dans un mélange de 85 ml de benzène et de 15 ml de triméthyl-2,2,4 pentane. On ajoute 3,4 g d'azo-bis-isobutyronitrile à cette solution qui est ensuite ajoutée à 550 ml de triéthylèneglycol anhydre.

On opère ensuite comme dans les exemples 6 et 7 pour obtenir des grains de polystyrène réticulé chlorométhylé (rendement 83%) contenant 78% des fonctions chlorométhylbenzène introduites dans le milieu réactionnel sous forme de chlorométhylstyrène.

**Revendications**

1. Procédé de préparation de copolymères réticulés en grains, porteurs de fonctions réactives, caractérisé en ce que l'on réalise la polymérisation radicalaire des monomères précurseurs incluant un ou plusieurs monomères porteurs de fonctions réactives, dans un milieu composé de deux liquides organiques non miscibles, émulsionnés, l'une des phases servant de solvant aux monomères et agent initiateur, l'autre assurant la dispersion de cette solution pour obtenir le copolymère en grains, le solvant pouvant être l'une des monomères lui-même, lorsque c'est un liquide.

2. Procédé selon la revendication 1, pour la préparation de polymères hydrophiles, caractérisé en ce qu'il est appliqué à des monomères polaires en mélange avec le monomère convenable porteur de la fonction réactive et effectué dans un milieu réactionnel constitué d'un solvant polaire stable en présence de radicaux libres et d'une huile saturée minérale ou végétale.

3. Procédé selon la revendication 2, caractérisé en ce que lesdits monomères polaires comportent des monomères qui formeront le squelette choisi parmi les acides, esters, nitriles ou amides acryliques ou méthacryliques, et des monomères de réticulation choisis parmi des dérivés bis-acryliques et en ce que le solvant polaire utilisé est choisi parmi le diméthylformamide, la N-méthylpyrrolidone, l'hexaméthylphosphotriamide, le diméthylsulfoxyde, un polyéthylène glycol ou l'un de ses dérivés, un carbonate d'alkylène, un nitrile aliphatique ou tout autre solvant des monomères non miscibles aux huiles.

4. Procédé selon la revendication 1, caractérisé en ce qu'il est appliqué à des monomères peu polaires ou apolaires en mélange avec le monomère convenable porteur de la fonction réactive et effectué dans un milieu réactionnel tel que l'une des phases est un solvant apolaire choisi parmi les hydrocarbures aromatiques ou non et l'autre un glycol, ses esters ou éthers.

5. Procédé selon la revendication 4, caractérisé en ce que les monomères peu polaires ou apolaires comportent un monomère de squelette choisi parmi le styrène et ses dérivés, et un monomère de réticulation, consistant en un divinylbenzène.

6. Procédé selon l'une quelconque des revendications précédentes, caractérisé en ce qu'on ajoute un agent tensio-actif au milieu réactionnel.

7. Procédé selon l'une quelconque des revendications précédentes, caractérisé en ce qu'on effectue la polymérisation en présence d'un agent porogène.

8. Procédé selon l'une quelconque des revendications précédentes, caractérisé en ce que le monomère porteur de la fonction réactive est un dithioester-styrénique, comme le vinyl-4 dithiobenzoate de méthyle ou de carboxyméthyle ou un thioester vinylique.

9. Procédé selon l'une des revendications 1 à 7, caractérisé en ce que le monomère porteur de la fonction réactive est un chlorure d'acide acrylique, méthacrylique ou un chloroformiate vinylique.

10. Procédé selon l'une des revendications 1 à 7, caractérisé en ce que le monomère porteur de la fonction réactive est un halogénoalkylstyrène ou un isocyanatoalkylstyrène.

11. Procédé selon l'une des revendications 1 à 7, caractérisé en ce que le monomère porteur de la fonction réactive est une amine polymérisable comme la vinylpyridine ou l'aminostyrène et ses dérivés ou une N-vinyl amide dont la N-vinylacétamide.

**Patentansprüche**

1. Verfahren zur Herstellung von reaktionsfähige Funktionen enthaltenden vernetzten Copolymerisaten in körniger Form, dadurch gekennzeichnet, dass man die freiradikalische Polymerisation der Vorstufenmonomeren einschliesslich eines oder mehrerer, reaktionsfähige Funktionen enthaltender Monome-

rer in einem Medium durchführt, das aus zwei organischen, nicht-mischbaren, emulgierten Flüssigkeiten besteht, wobei eine der Phasen als Lösungsmittel für die Monomeren und Initiator dient und die andere die Dispergierung dieser Lösung sicherstellt, um Copolymerisate in körniger Form zu erhalten, wobei das Lösungsmittel eines der Monomeren selbst sein kann, wenn dieses eine Flüssigkeit ist.

2. Verfahren nach Anspruch 1 zur Herstellung von hydrophilen Polymerisaten, dadurch gekennzeichnet, dass es auf polare Monomere in Mischung mit dem geeigneten, die reaktionsfähige Funktion enthaltenden Monomeren angewandt und in einem Reaktionsmedium, das aus einem stabilen polaren Lösungsmittel besteht, in Gegenwart von freien Radikalen und einem anorganischen oder pflanzlichen gesättigten Öl durchgeführt wird.

3. Verfahren nach Anspruch 2, dadurch gekennzeichnet, dass die genannten polaren Monomeren gerüstbildende, aus Säuren, Estern, Acrylo- oder Methacrylonitrilen oder -amiden ausgewählte Monomere und aus Bisacrylderivaten ausgewählte Vernetzungsmonomere umfassen, und dass das verwendete polare Lösungsmittel aus Dimethylformamid, N-Methylpyrrolidon, Hexamethylphosphortriamid, Dimethylsulfoxid, einem Polyethylenglycol oder einem seiner Derivate, einem Alkylencarbonat, einem aliphatischen Nitril oder jedem anderen Lösungsmittel der mit Ölen nicht-mischbaren Monomeren ausgewählt ist.

4. Verfahren nach Anspruch 1, dadurch gekennzeichnet, dass es auf wenig polare oder apolare Monomere in Mischung mit dem geeigneten, die reaktionsfähige Funktion enthaltenden Monomeren in einem solchen Reaktionsmedium angewandt wird, dass eine der Phasen ein aus aromatischen oder nicht-aromatischen Kohlenwasserstoffen ausgewähltes apolares Lösungsmittel und das andere aus einem Glykol, seinen Estern oder Ethern ausgewählt ist.

5. Verfahren nach Anspruch 4, dadurch gekennzeichnet, dass die wenig polaren oder apolaren Monomeren ein aus Styrol und seinen Derivaten ausgewähltes Gerüstmonomeres und ein aus einem Divinylbenzol bestehendes Vernetzungsmonomeres umfassen.

6. Verfahren nach irgendeinem der vorstehenden Ansprüche, dadurch gekennzeichnet, dass man dem Reaktionsmedium ein oberflächenaktives Mittel zusetzt.

7. Verfahren nach irgendeinem der vorstehenden Ansprüche, dadurch gekennzeichnet, dass man die Polymerisation in Gegenwart eines Treibmittels durchführt.

8. Verfahren nach irgendeinem der vorstehenden Ansprüche, dadurch gekennzeichnet, dass das die reaktionsfähige Funktion enthaltende Monomere ein Dithiostyrolester wie 4-Vinyldithiomethyl- oder 4-Vinyldithiocarboxymethylbenzoat oder ein Vinylthioester ist.

9. Verfahren nach einem der Ansprüche 1 bis 7, dadurch gekennzeichnet, dass das die reaktionsfähige Funktion enthaltende Monomere ein Acrylsäure- oder Methacrylsäurechlorid oder ein Vinylchloroformiat ist.

10. Verfahren nach einem der Ansprüche 1 bis 7, dadurch gekennzeichnet, dass das die reaktionsfähige Funktion enthaltende Monomere ein Halogenalkylstyrol oder ein Isocyanatoalkylstyrol ist.

11. Verfahren nach einem der Ansprüche 1 bis 7, dadurch gekennzeichnet, dass das die reaktionsfähige Funktion enthaltende Monomere ein polymerisierbares Amin wie Vinylpyridin oder Aminostyrol und seine Derivate oder ein N-Vinylamid wie N-Vinylacetamid ist.

**Claims**

1. Process for the preparation of crosslinked copolymers in the form of particles bearing reactive functional groups, characterized in that the radical polymerization of the precursor monomers including one or more monomers bearing reactive functional groups is performed in a medium consisting of two emulsified, immiscible organic liquids, one of the phases serving as a solvent for the monomers and initiating agent, the other being responsible for the dispersion of this solution to produce the copolymer in particle form, it being possible for the solvent to be one of the monomers itself, when it is a liquid.

2. Process according to Claim 1, for the preparation of hydrophilic monomers, characterized in that it is applied to polar monomers in the form of a mixture with the appropriate monomer bearing the reactive functional group and is performed in a reaction medium consisting of a polar solvent which is stable in the presence of free radicals and a mineral or vegetable saturated oil.

3. Process according to Claim 2, characterized in that the said polar monomers comprise monomers which will form the skeleton chosen from acrylic or methacrylic acids, esters, nitriles or amides, and crosslinking monomers chosen from bis-acrylic derivatives and in that the polar solvent employed is chosen from dimethylformamide, N-methylpyrrolidone, hexamethylphosphotriamide, dimethyl sulphoxide, a polyethylene glycol or one of its derivatives, an alkylene carbonate, an aliphatic nitrile or any other solvent for the monomers which are not miscible with oils.

4. Process according to Claim 1, characterized in that it is applied to low-polarity or nonpolar monomers in the form of a mixture with the appropriate monomer bearing the reactive functional group and is performed in a reaction medium such that one of the phases is a nonpolar solvent chosen from aromatic or other hydrocarbons and the other is a glycol, its esters or its ethers.

5. Process according to Claim 4, characterized in that the low-polarity or nonpolar monomers comprise a skeleton monomer chosen from styrene and its derivatives, and a crosslinking monomer consisting of a divinylbenzene.

6. Process according to any one of the preceding claims, characterized in that a surface-active agent is added to the reaction medium.

7. Process according to any one of the preceding claims, characterized in that the polymerization is performed in the presence of a blowing agent.

8. Process according to any one of the preceding claims, characterized in that the monomer bearing the reactive functional group is a styrene-based dithio ester such as methyl or carboxymethyl 4-vinyldithiobenzoate or a vinyl thioester.

9. Process according to one of Claims 1 to 7, characterized in that the monomer bearing the reactive functional group is a chloride of acrylic or methacrylic acid or a vinyl chloroformate.

10. Process according to one of Claims 1 to 7, characterized in that the monomer bearing the reactive functional group is a haloalkylstyrene or an isocyanatoalkylstyrene.

11. Process according to one of Claims 1 to 7, characterized in that the monomer bearing the reactive functional group is a polymerizable amine such as vinylpyridine or aminostyrene and its derivatives or an N-vinyl amide, including N-vinylacetamide.